# EUROPEAN PATENT SPECIFICATION

(11) **EP 3 957 852 B1**
(45) Date of publication and mention of the grant of the patent: **29.04.2026**
(21) Application number: 21181480.1
(22) Date of filing: 24.06.2021
(51) Int. Cl.: F03D 9/19

(54) **WIND PARK WITH DATA PROCESSING CENTRES**
WINDPARK MIT DATENVERARBEITUNGSZENTREN
PARC ÉOLIEN COMPORTANT DES CENTRES DE TRAITEMENT DE DONNÉES

(30) Priority: 10.07.2020 DK PA202070481
(43) Date of publication of application: 23.02.2022
(73) Proprietor: Vattenfall AB, 169 92 Stockholm (SE)
(72) Inventor: HJORT, Thomas, 7120 Vejle Ø (DK); MEYER, Karl, Odense 5000 (DK); KORDKHEILI, Reza Ahmadi, 7100 Vejle Ø (DK); HOFFMANN, Alfred, 6700 Esbjerg (DK)
(74) Representative: Zacco Denmark A/S

(56) References cited:
- DE-A1- 10 055 973
- US-A1- 2005 006 905

## Description

### Field of disclosure

The present disclosure relates to a wind farm, comprising a plurality of wind turbine generators (WTG). Each wind turbine generator comprises a rotor having one or more blades, an electrical generator driven by said rotor for converting rotation thereof into electrical power and a data processing centre having one or more data processing units connected to a data communication network and configured to receive, process, store, and transmit data over the data communication network, wherein the data processing centre is powered by electrical power generated by the electrical generator.

### Background

The number of new wind farms comprising a plurality of wind turbine generators (WTG) is continuing to grow and existing wind farms, where expedient, are maintained and updated. The operation of the wind farms and the wind turbine generators are continuously improved for increased energy production from each WTG and the wind farms as a whole.

It has been a constant object in the development of wind power to improve the profitability of wind farms by improving the financial gain made from the investment in erecting the wind farm.

Forecasts and optimization of the operation of the WTGs relying on large amounts of data and processing hereof are well established elements of operating the WTGs for improved production in consideration of not compromising the lifespan of the WTGs in particular the blades. Efforts are also made in increasing the nominal production capacity of the WTGs in order to lower the installation costs per installed MW production capacity and in further standardizing various components used in wind farms across different WTG platforms in order to improve competition conditions for producers of components and thereby minimize production costs of the wind farms

An example of a prior art wind farm is known from DE 100 55 973 A1.

### Description of the disclosure

The present disclosure relates to a wind farm comprising a plurality of wind turbine generators, each of which comprises a rotor having one or more blades, an electrical generator driven by said rotor for converting rotation thereof into electrical power, and a data processing centre having one or more data processing units connected to a data communication network and configured to receive, process, store, and transmit data over the data communication network, wherein the data processing centre is arranged to be powered by electrical power generated by the electrical generator, wherein the maximal power consumption of the data processing centre constitutes at least 10%, such as at least 30% or even more than 50% of the nominal power capacity of the electrical generator of the individual wind turbine generator in which the data processing centre is installed.

By providing a data processing centre in each of the wind turbine generators of the wind farm and powered by means of the electrical generator of the wind turbine generator in which it is provided, it is achieved that the costs of data processing can be reduced significantly by eliminating power losses in e.g. converting and transmitting electrical power from the individual wind turbine since the power for the data processing centre is consumed at the location where it is produced. Moreover, costs of establishing equipment for e.g. converting and transmitting electrical power from the individual wind turbine may be significantly reduced as compared to a wind farm, where the generated electrical power is transmitted to a power transmission grid or a power distribution grid from which data processing centres are connected for being powered.

In one aspect, the wind farm may comprise more wind turbine generators (WTGs) than the mentioned plurality of WTGs. The additional WGTs may differ from the embodiments of WTGs disclosed above and may have a configuration comprising less, more or a different combination of components. Further wind turbine generators of the wind farm may feed electrical power to the data processing centre of one or more of the plurality of wind turbine generators comprising such data processing centre.

Each of the plurality of wind turbine generators may further comprise other flexible loads, such as equipment for production of desalinated water to be used e.g. for irrigation or drinking water, equipment for storage of electric energy in electric batteries or other types of energy storage, equipment for production of liquid ammonia, equipment for production of liquid gas, such as liquid air, liquid oxygen or liquid nitrogen. Further wind turbine generators of the wind farm may feed electrical power to such other flexible loads or power consumption arrangements of one or more of the plurality of wind turbine generators comprising such arrangements or flexible loads.

According to a more particular embodiment, each of the plurality of wind turbine generators furthermore comprises a heat recovery arrangement for recovering waste heat from the electrical generator and from the data processing centre, wherein the wind farm furthermore comprises a heat recovery piping system connecting each of said plurality of wind turbine generators with a cooling water feed pipe of the heat recovery piping system arranged for supplying cooling water to the heat recovery arrangement and a cooling water return pipe of the heat recovery piping system arranged for receiving heated cooling water from the heat recovery arrangement.

By providing the wind farm with such means for recovering waste heat from the data processing centres, a significant improvement of the profitability of the wind farm may be achieved since substantially all of the power consumption of the data processing centres are converted into waste heat, which together with the waste heat recovered from the electrical generator can be recovered and provide heat for e.g. district heating and/or process heat for other applications. This is particularly profitable in cases where the maximal power consumption of the data processing centre constitutes at least 10%, such as at least 30% or even more than 50% of the nominal power capacity of the electrical generator of the individual wind turbine generator in which the data processing centre is installed.

Alternatively or additionally, the recovered waste heat may be employed to produce electricity by means of a Sterling motor or an Organic Rankine Cycle driving an electrical generator or for desalination of seawater, such as by means of a Multiple-effect desalination (MED) plant.

It is further advantageous in case each of said plurality of wind turbine generators further comprises a gearbox connecting the rotor and the electrical generator, and wherein the heat recovery arrangement in each of said wind turbine generators is adapted for recovering waste heat from the gearbox.

Each of the plurality of wind turbine generators may furthermore comprise a rectifier for converting alternating current power from the electrical generator to direct current power, a power inverter for converting direct current power from the rectifier and optionally from the electrical power generation arrangement to alternating current power, and a DC-link connecting the rectifier and the power inverter, wherein the data processing centre is arranged for being powered by obtaining direct current power from the DC-link. Hereby, the conversion losses of the power for the data processing centre may be further reduced. Also, the nominal power capacity of the power inverter of each of the plurality of wind turbine generators may be reduced so that it constitutes no more than 65%, preferably no more than 50%, such as in the range of 15% to 40%, of the nominal power capacity of the electrical generator of that wind turbine generator, so that the installation costs per installed MW production capacity can be lowered. The term nominal capacity is also known as nameplate capacity of equipment, such as a power inverter or an electrical generator.

According to a particular embodiment, the electrolyzer arrangement and the electrical power generation arrangement may be constituted by one or more stacks of regenerative or reversible fuel cells, i.e. by the same arrangement that can be operated for both purposes.

Furthermore, the heat recovery arrangement in each of said wind turbine generators may be adapted for recovering waste heat from the power inverter.

In another preferred embodiment, each of said plurality of wind turbine generators furthermore comprises an electrolyzer arrangement for production of hydrogen arranged for using electrical power from the electrical generator. By providing each wind turbine generator (WTG) with an electrolyzer arrangement for the production of hydrogen powered by the electrical generator provides for a lowering of transmission and conversion losses as compared to solutions where the electrolyzer arrangements are installed centrally for the wind farm. Preferably, the heat recovery arrangement in each of the plurality of wind turbine generators is also arranged for recovering waste heat from the electrolyzer arrangement. The waste heat recovered from the heat recovery arrangement may in a preferred embodiment also be applied for heating of the electrolyzer arrangement, such as a plurality of stacks of electrolysis cells, at start-up of production of hydrogen for ensuring that the electrolyzer arrangement reaches a temperature within the optimal range of operation thereof.

It is furthermore advantageous that the electrolyzer arrangement of each of the plurality of wind turbine generators is arranged for being powered by obtaining direct current power from the DC-link.

In one embodiment of the wind farm, the cooling water feed pipe of the heat recovery piping system may furthermore be adapted for supplying water for electrolyzation to the electrolyzer arrangement. The electrolyzer arrangement requires for its operation a supply of water of a sufficient purity, such as deionized water or water that easily can be purified to a sufficient degree for the electrolyzer arrangement. By using the cooling water feed pipe to supply water for the electrolyzer arrangement, the provision of e.g. deionizing equipment at the WTG or other arrangements for supplying water to the electrolyzation will not be required.

Each of said plurality of wind turbine generators may furthermore comprise a hydrogen storage arrangement for storing hydrogen produced by the electrolyzer arrangement and an electrical power generation arrangement for converting the stored hydrogen to electrical power, and wherein the heat recovery arrangement in each of said wind turbine generators is arranged for recovering waste heat from the electrical power generation arrangement. The electrolyzer arrangement may in particular be beneficial for utilizing any surplus electricity produced by the WTG. The hydrogen may act as a storage medium for the surplus energy. Hydrogen may be stored in bulk tanks as pressurised gas and retrieved when supplies are low; thus, when a corresponding energy demand arises; the hydrogen can fulfil it directly.

The waste heat recovered from the heat recovery arrangement may in a preferred embodiment also be applied for heating of the electrical power generation arrangement, such as a plurality of stacks of fuel cells, at start-up of production of electrical power from the stored hydrogen for ensuring that the electrical power generation arrangement reaches a temperature within the optimal range of operation thereof.

Also, the heat recovery arrangement in each of said wind turbine generators may be adapted for recovering waste heat from the hydrogen storage arrangement, in particular from a compressor for compressing the produced hydrogen before storage thereof.

Said electrical power generation arrangement is preferably adapted for providing direct current power to the DC-link.

Each of said plurality of wind turbine generators may further comprises a step-up transformer connected to the electrical power inverter for raising the voltage of the power output from the electrical power inverter and delivering an electrical power output to a power grid, such as an internal power grid of the wind farm, and the heat recovery arrangement in each of said wind turbine generators is arranged for recovering waste heat from the step-up transformer.

The wind farm may further comprise a hydrogen piping system arranged for receiving hydrogen from each of the plurality of wind turbine generators. The hydrogen piping system may comprise a pressurised conduct, or it may alternatively comprise a LOHC feed pipe arranged for supplying dehydrogenated LOHC to each individual wind turbine generator and a LOHC return pipe arranged for receiving hydrogenated LOHC from the wind turbine generator.

The wind farm further comprises a data communication network connecting the data processing centres of each of the plurality of wind turbine generators with one or more public data communication networks.

During periods where the power production from the wind farm exceeds a requested power output, e.g. to a power transmission line connecting to a power transmission grid or a power distribution grid, the electrolyzer arrangement uses the excess power to produce hydrogen which may be stored in the hydrogen storage arrangement for later power production by the electric power generation arrangement, such as fuel cells, e.g. when the market price for electrical power makes it advantageous at peak load or for fulfilling a requirement from the transmission grid operator to deliver a prescribed amount of electric power to the grid. In particular, the wind farm may operate as a baseload power plant, which guarantees a minimum power output to the grid or a combined baseload and peak load power plant.

The wind farm may in one embodiment be a stand-alone system without any electrical power transmission connection with external power grid. However, in one embodiment, the wind farm further comprises a power transmission line for transmitting electrical power from each of the wind turbine generators to an electrical grid. Thus, it is preferred that the wind farm further comprises a power transmission line for transmitting electrical power from the power inverter of each of the wind turbine generators to an electrical grid, wherein the nominal power that can be transmitted from the wind farm by means of the power transmission line constitutes no more than 65%, preferably no more than 50%, such as in the range of 15% to 40%, of the sum of the nominal capacity of the electrical generators of all wind turbine generators in the wind farm. The magnitude of the nominal power that can be transmitted from the wind farm by means of the power transmission line is often limited due to the capacity of the transmission grid that receives the power output from the wind farm, but can also be limited due to the capacity of the power transmission line of the wind farm. **It is** known to dimension the nominal capacity of wind farms, i.e. the sum of the nominal capacities of the electrical generators in the wind farm, to match or slightly overmatch the nominal power capacity that can be transmitted from the wind farm by means of the power transmission line.

However, it has been found by the present disclosure that by providing each of the plurality of wind turbine generators with the electrolyzer arrangement for absorbing excess produced power from the electrical generator, the hydrogen storage arrangement for storing the energy and the electric power generation arrangement and dimensioning those correctly, it is possible to provide a wind farm where the nominal capacity of the electrical generators and thus the potential energy production from wind farm by far exceeds the limit of the nominal power capacity that can be transmitted from the wind farm by means of the power transmission line.

In a particular embodiment hereof, the nominal capacity of the power transmission line of the wind farm constitutes no more than 65%, preferably no more than 50%, such as in the range of 15% to 40%, of the sum of the nominal capacity of the electrical generators of all wind turbine generators in the wind farm.

In one embodiment of the wind farm, the plurality of wind turbine generators may comprise at least 35 wind turbine generators, such as at least 50 wind turbine generators.

In one embodiment of the wind farm, the plurality of wind turbine generators may be arranged in offshore positions.

In one embodiment of the wind farm, the sum of nominal capacity of the electrical generators of the plurality of wind turbine generators may be at least 50 MW, such as at least 250 MW for onshore wind farms and at least 500 MW, such as at least 1,000 MW for offshore farms.

It should be noted that the wind farm may furthermore contain a plurality of further wind turbine generators without one or more of the components disclosed herein as part of the plurality of wind turbine generators.

In one embodiment of the wind farm, the heat recovery arrangement of each of the wind turbine generators may comprise a heat pump arrangement arranged for raising the temperature of the heated water prior to being received by the cooling water return pipe.

In one aspect, the heat pump arrangement may be of a type employing phase change of a refrigerant.

The heat pump may be arranged to ensure a high temperature of the heated water in the return pipe to e.g. 100 - 125° C and/or to increase the flow of heated water at a lower temperature.

The wind farm may be operated to generate heated water for the return pipe by means of the heat pump from power generated by the electrical power generation arrangement in case the demand of heat exceeds the recovered waste heat in periods of low wind.

### Brief description of the drawings

Various examples are described hereinafter with reference to the figures. Like reference numerals refer to like elements throughout. Like elements will not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

An embodiment of a wind farm according to the present invention is shown in the drawings, of which:
Fig. 1 is a schematic representation of the wind farm with the internal electrical power grid and the heat recovery piping system indicated,
Fig. 2 is the schematic representation of Fig. 1 with the hydrogen piping system and the data communication network illustrated,
Fig. 3 shows the components of one of the wind turbine generators of the wind park, and
Fig. 4 shows the heat recovery arrangement of the wind turbine.

### Reference list

- 1: Wind farm
- 2: Wind turbine generator
- 3: Rotor with wind turbine blades
- 4: Electrical generator
- 5: Gearbox
- 6: Power converter
- 7: Rectifier
- 8: DC-link
- 9: Inverter
- 10: Step-up transformer
- 11: Internal power grid
- 12: Off-shore substation
- 13: Power transmission line
- 14: Onshore transmission grid
- 15: Electrolyzer arrangement
- 16: Hydrogen storage arrangement
- 16a: Hydrogen compressor
- 17: Fuel cell arrangement
- 18: Pressurised hydrogen pipeline
- 19: On-shore hydrogen receiving facility
- 20: Data processing centre
- 21: Data processing units
- 22: Data communication network
- 23: Heat recovery arrangement
- 24: Heat exchange liquid circuit
- 25: Cooling liquid
- 26: Heat recovery piping system
- 27: Cooling water feed pipe
- 28: Cooling water return pipe
- 29: Liquid-liquid heat exchanger
- 30: On-shore district heating station
- 31: Heat pump

### Detailed description

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Throughout the specification, when an element is referred to as being "connected" to another element, the element is "directly connected" to the other element, or "electrically connected" to the other element with one or more intervening elements interposed there between.

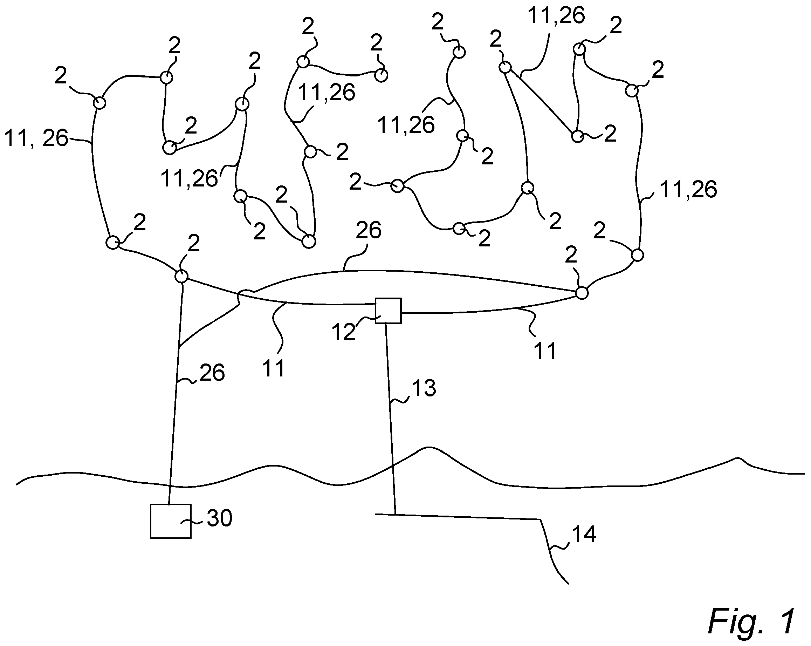

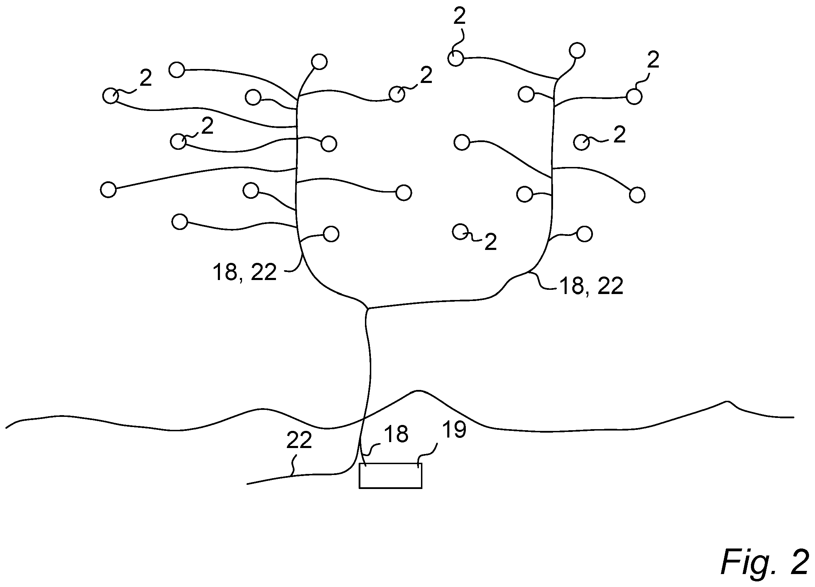

A general layout of a wind farm 1 according to the present invention is shown in Fig. 1. The wind farm comprises a plurality of offshore wind turbine generators 2, which are each, equipped with at least one rotor with wind turbine blades 3 arranged to drive an electric generator 4 via a gearbox 5, as illustrated in the embodiment of Fig.2. The electrical generator 4 is connected to a power converter 6 comprising a rectifier 7 for rectifying the alternating-current electric power from the electrical generator and feeding it to a DC-link 8, and an inverter 9 which converts direct-current electric power from the DC-link 8 to a constant-frequency alternating current electric power (typically 50 Hz or 60 Hz, but other frequencies such as 15 Hz or 100 Hz could be employed). The power output from the inverter 9 is transformed to a higher voltage, typically from 0.690 kV to 33 kV by means of a step-up transformer 10 at the wind turbine generator 2. The step-up transformer 10 of each wind turbine generator 2 is connected to an internal power grid 11 of the wind farm 1. An offshore substation 12 transforms the power from the internal power grid 11 to a higher voltage, such as 220 kV and transfers it via a power transmission line 13 to an onshore transmission grid 14.

Such wind farm 1 is commonly known and may comprise a number of variations to the above-disclosed details. The wind turbine generators 2 may e.g. be designed without a gearbox 5 and instead have direct drive of the electrical generator 4 by the rotor 3, instead of full-scale conversion of the power from the electrical generator 4 by means of the power converter 6, a doubly-fed generator 4 could be employed. In another alternative, the power transmission line 13 is a high-voltage direct current (HVDC) connection. The individual wind turbine generator 2 could comprise more than one rotor with one or more wind turbine blades 3 and a number of other well-known variations to the wind turbine generators 2 as described above could be implemented without changing the scope and nature of the present invention.

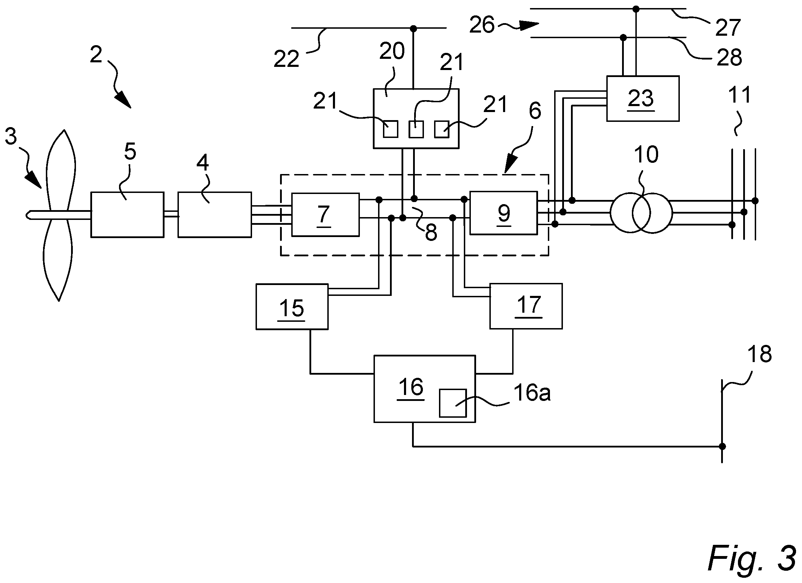

As illustrated in the embodiment of Fig. 3, each of the wind turbine generators 2 further comprises an electrolyzer arrangement 15 for production of hydrogen from electrolysis of water by means of electrical power produced by the electrical generator 4 of the wind turbine generator 2 supplied from the DC-link 8 of the power converter 6. The hydrogen from the electrolyzer arrangement 15 is compressed to 350 bar (35 MPa) and stored in the hydrogen storage arrangement 16 of the wind turbine generator 2. A fuel cell arrangement 17 is also provided in the wind turbine generator 2, which is arranged for converting hydrogen from the hydrogen storage arrangement 16 into electrical power, which is delivered to the DC-link 8 of the power converter 6. In an alternative embodiment, the electrolyzer arrangement 15 is alternatively or additionally connected to be powered from the alternating current on one side or the other of the step-up transformer 10, whereby the electrolyzer arrangement 15 more easily can be fed with power from other wind turbine generators WTG 2 of the wind farm 1 by means of the internal power grid 11. In such case, the electrolyzer arrangement 15 will comprise an AC-DC rectifier unit.

The electrolyzer arrangement 15 comprises a number of stacks of low-temperature Proton Exchange Membrane (PEM) electrolysis cells which usually has a preferred operating temperature of about 80-100 °C. Alternative, the electrolyzer arrangement 15 comprises alkaline electrolysis cells or anion exchange membrane (AEM) electrolysis cells. Other types include high-temperature Proton Exchange Membrane (PEM) electrolysis cells which usually has a preferred operating temperature of about 150-180 °C. Another possibility is Solid Oxide Electrolysis Cell (SOEC), which has an optimal operating temperature of 700-1000 °C. The electrolyzer arrangement 15 includes other equipment necessary for operating the electrolysis stacks, such as a power conversion unit to feed the stacks of electrolyser cells with a suitable direct current, a water supply unit for feeding the stacks with deionized water, which may include a desalination apparatus for treating sea water to make it suitable for use in the electrolyser cells, temperature control arrangements for controlling the operating temperature of the stacks of electrolysis cells to be within the optimal operational temperature range, and an electrolyzer control unit for controlling the operation of the electrolyzer arrangement 15.

The fuel cell arrangement 17 comprises a number of stacks of low-temperature Proton Exchange Membrane fuel cells (PEMFC) operating preferably at temperatures around 80-100 °C. Alternatively, the fuel cell arrangement 17 comprises Alkaline Fuel Cells (AFC) or anion exchange membrane fuel cells (AEMFC), also known as alkaline anion exchange membrane fuel cell (AAEMFC), alkaline membrane fuel cells (AMFC), hydroxide exchange membrane fuel cells (HEMFC), or solid alkaline fuel cells (SAFC). Yet another alternative is Solid Oxide Fuel Cell (SOFC). The fuel cell arrangement 17 includes other equipment necessary for operating the fuel cell stacks, such as a power conversion unit for feeding the power produced by the stacks of fuel cells to the DC-link 8 with a suitable voltage, temperature control arrangements for controlling the operating temperature of the stacks of fuel cells to be within the optimal operational temperature range, and a fuel cell control unit for controlling the operation of the fuel cell arrangement 17.

Alternative means for storing the produced hydrogen may be incorporated, such as using Liquid Organic Hydrogen Carriers (LOHC) or other well-known storage means. The use of LOHC may be advantageous because the hydrogen can be stored at ambient temperature and pressure and because the problems of storage of gaseous hydrogen, such as deterioration of materials in contact with the hydrogen by embrittlement and corrosion and risk of leakage are generally solved by the LOHC.

Other means for electrical power generation from the stored hydrogen, as an alternative to the fuel cell arrangement 17 could e.g. include an internal combustion engine, such as a piston engine or a gas turbine coupled to an electrical generator.

The electrolyzer arrangement 15 and the fuel cell arrangement 17 may in certain embodiments be one and the same set of regenerative or reversible fuel cells 15, 17, which may be operated as electrolyzers as well as fuel cells. One example is Solid Oxide Electrolysis Cell (SOEC), which is a reversely operated Solid Oxide Fuel Cell (SOFC), also named a Solid Oxide Regenerative Fuel Cell (SORFC). Such a cell operates at relatively high temperatures (700-1000 °C), which makes the efficiency very high. The hydrogen generated in the reversible fuel cells 15, 17 can be stored and reconverted into electricity again by means of the same reversible fuel cells 15, 17, such as Solid Oxide Regenerative Fuel Cell (SORFC). Alternative options for reversible fuel cells are e.g. alkaline fuel cells (AFC) and PEM fuel cells.

The wind farm 1 may be provided with a pressurised hydrogen pipeline 18 that connects the hydrogen storage arrangement 16 of each of the wind turbine generators 2 with an on-shore hydrogen receiving facility 19. The hydrogen may be distributed from the on-shore hydrogen receiving facility 19 to various use, be converted into electro fuels, such as butanol, butane or methane, or be stored chemically, such as in LOHC.

Alternatively, the hydrogen collected from the wind turbine generators 2 may be converted to electro fuel at processing plants arranged offshore at the individual wind turbine generator 2 or at offshore processing plants common for a number of the wind turbine generators 2.

The hydrogen may alternatively be conveyed from the wind turbine generators 2 to the on-shore hydrogen receiving facility 19 or to an off-shore processing plant by means of a two-string hydrogen piping system (not shown). The hydrogen piping system may comprise a LOHC feed pipe arranged for supplying dehydrogenated LOHC to each individual wind turbine generator 2 and a LOHC return pipe arranged for receiving hydrogenated LOHC from the wind turbine generator 2.

Each of the wind turbine generators 2 is furthermore equipped with a data processing centre 20 having a plurality of data processing units 21 connected to a data communication network 22 of the wind farm 1 and being configured to receive, process, store and transmit data by means of the data processing network 22. The data processing centre 20 is arranged to be powered from the DC-link 8 of the power converter 6 where the power is obtained from the electrical generator 4 or from the fuel cell arrangement 17, depending on the state of operation of the wind turbine generator 2. In an alternative embodiment, the data processing centre 20 is alternatively or additionally connected to be powered from the alternating current on one side or the other of the step-up transformer 10, whereby the data processing centre 20 more easily can be fed with power from other wind turbine generators WTG 2 of the wind farm 1 by means of the internal power grid 11. In such case, the data processing centre 15 will comprise an AC-DC rectifier unit.

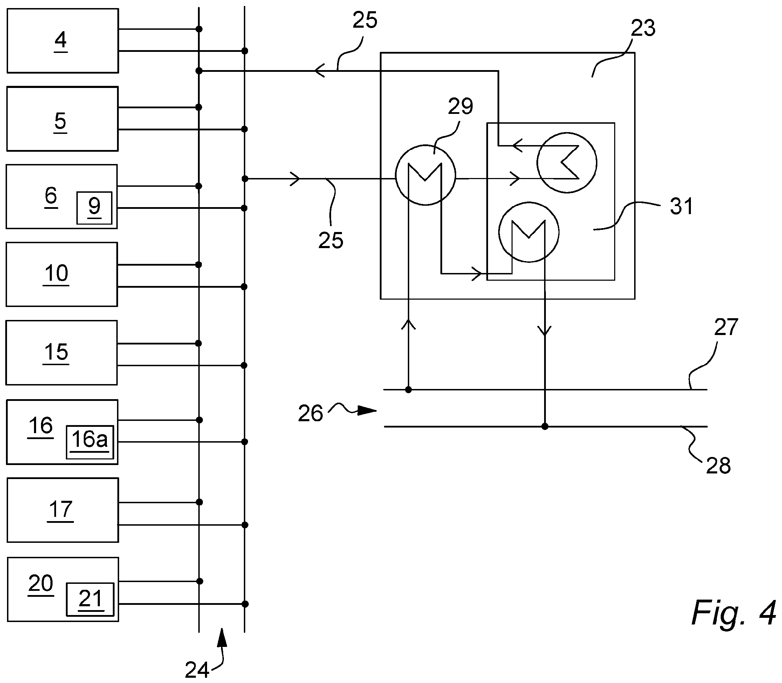

Fig. 4 illustrates one embodiment of the wind turbine generators 2, which is provided with a heat recovery arrangement 23. The illustrated heat recovery arrangement 23 comprises a heat exchange liquid circuit 24 that provides a cooling liquid 25 to the electrical generator 4, the gearbox 5, the power converter 6, where in particular the inverter 9 is in need of cooling off waste heat, the step-up transformer 10, the electrolyzer arrangement 15, the compressor 16a of the hydrogen storage arrangement 16, the fuel cell arrangement 17 and the data processing centre 20, each of which either comprises a heat exchanger for exchanging heat between an internal cooling system of the component and the cooling liquid 25 or uses the cooling liquid 25 directly for cooling of the component 4, 5, 6, 9, 10, 15, 16, 16a, 17, 20. The cooling liquid 25 is heated in the components 4, 5, 6, 9, 10, 15, 16, 16a, 17, 20 by absorbing the waste heat from those components 4, 5, 6, 9, 10, 15, 16, 16a, 17, 20 and is returned to the heat recovery arrangement 23. According to Fig. 4, the heat recovery arrangement 23 is connected to the AC side of the inverter 9 to obtain operating power from the three AC phases. Alternatively, the heat recovery arrangement 23 could be connected to one phase and a neutral conductor or it could be connected to be fed by power from the DC-link 8.

The wind farm 1 is provided with a heat recovery piping system 26 connecting each of the wind turbine generators 2 with a cooling water feed pipe 27 arranged for supplying cooling water to the heat recovery arrangement 23 of the wind turbine generator 2 and a cooling water return pipe 28 arranged for receiving heated water from the heat recovery arrangement 23. The cooling liquid 25 returned from the components 4, 5, 6, 9, 10, 15, 16, 16a, 17, 20 passes through a liquid-liquid heat exchanger 29 in the heat recovery arrangement 23 and delivers the waste heat to the cooling water from the cooling water feed pipe 27, and the heated cooling water is directed to the cooling water return pipe 28.

The temperature control arrangements of the electrolyzer arrangement 15 and the temperature control arrangements of the fuel cell arrangements 17 employs the heat recovery arrangement 23 to provide heating or cooling to the stacks of electrolysis cells and stacks of fuel cells, respectively, dependent on the operational mode. At start-up of operation of the stacks of cells, the temperature control arrangements are operated to heat the stacks of cells, preferably to reach their optimal operational temperature range or at least bring them close to that temperature range, and during operation of the stacks of cells, temperature control arrangements are operated to maintain the temperature of the stacks of cells within their optimal temperature range by means of heating or cooling the stacks.

The cooling water return pipe 28 is connected to an on-shore district heating station 30 where the recovered waste heat from the wind farm 1 is transferred to a district heating system. Depending on the geographical location of heating demand on-shore, the heat recovery piping system 26 may be connected to more than one on-shore district heating station 30 in order to distribute the heat to more positions. Also, the recovered waste heat from the heat recovery piping system 26 may additionally or alternatively be employed to produce electrical power by means of e.g. a Sterling motor or an Organic Rankine Cycle driving an electrical generator or for desalination of seawater, such as by means of a Multiple-Effect Desalination (MED) plant.

The cooling water feed pipe 27 may also be applied to supply water of a sufficient purity to the electrolyzer arrangement 15, such as deionized water or water that easily can be purified to a sufficient degree for the electrolyzer arrangement 15 at the wind turbine generator 2. Alternatively or additionally, the wind turbine generator 2 may be provided with a desalination arrangement (not shown) for providing a supply of water suitable for the electrolyzer arrangement 15.

The heat recovery arrangement 23 of the wind turbine generator 2 is also provided with a heat pump 31 which is applied for increasing the temperature of cooling water before it is directed to the cooling water return pipe 28 using the cooling liquid 25 as a heat source after it has passed the liquid-liquid heat exchanger 29. Hereby, the cooling effect of the cooling liquid 25 is enhanced while the exit temperature of the cooling water delivered to the cooling water return pipe 28 can be elevated to e.g. 80 - 125 °C, which is preferable for some types of district heating systems or for alternative use of the returned cooling water. Alternatively, the flow of cooling water from cooling water feed pipe 27 may be increased, both alternatives increases the usable heat flow from the wind turbine generator 2. The heat pump 31 is also arranged for heating of cooling water from the cooling water feed pipe 27 using sea water (not shown) as a heat source for use in operational situations where the demand for heat flow from the cooling water returned from the wind turbine generator 2 by the cooling water return pipe 28 cannot be met by the waste heat recovered from the components 4, 5, 6, 9, 10, 15, 16, 16a, 17, 20 of the wind turbine generator 2 by the heat recovery arrangement 23, such as in periods of low wind and/or high demands from the district heating or other consumers of the heat received from the cooling water returned by the cooling water return pipe 28. In case the demand of heat exceeds the recovered waste heat in periods of low wind, the fuel cell arrangement 17 may be operated to produce sufficient electrical power to operate the heat pump 31 if necessary.

In variations of embodiments of the present invention, some parts and components of the wind turbine generators 2 of the wind park may be omitted or switched with similar components without changing the invention as disclosed herein. The wind park 1 may furthermore contain a plurality of further wind turbine generators without one or more of the components disclosed herein. In particular, the electrolyzer arrangement 15 of each of the plurality of wind turbine generators 2 may furthermore be employed for converting electrical power generated by other wind turbine generators 2 of the wind park 1 with or without its own electrolyzer arrangement 15 into hydrogen.

The power consumption arrangements of each of the wind turbine generators 2 in the form of electrolyzer arrangements 15 and/or data processing centres 20 may furthermore be employed for reducing the power output delivered to the onshore transmission grid 14 during temporal reduction in the power requirements thereof, e.g. during grid failures, by consuming a larger portion of the generated power by the wind turbine generators 2 of the wind farm 1.

The heat pump may also be adapted for heating of cooling water from the cooling water feed pipe using sea water as a heat source in operational situations, where the demand for heat flow from the cooling water returned from the wind turbine generator 2 by the cooling water return pipe 28 cannot be met by the waste heat recovered from the components 4, 5, 6, 9, 10, 16, 16a, 17 of the wind turbine generator 2 by the heat recovery arrangement 23, such as in periods of low wind and/or high demands from the district heating or other consumers of the heat received from the cooling water returned by the cooling water return pipe 28.

## Claims

1. A wind farm (1) comprising a plurality of wind turbine generators (2), each of which comprises
a rotor (3) having one or more blades,
an electrical generator (4) driven by said rotor (3) for converting rotation thereof into electrical power, the wind farm being charactirised by the following features:
a data processing centre (20) having one or more data processing units (21) configured to be connected to a data communication network (22) and configured to receive, process, store, and transmit data over the data communication network (22), wherein the data processing centre (20) is arranged to be powered by electrical power generated by the electrical generator (4) and wherein the maximal power consumption of the data processing centre (20) constitutes at least 10%, such as at least 30% or even more than 50% of the nominal power capacity of the electrical generator (4) of said wind turbine generator (2), wherein the data processing centre (20) of the wind turbine generator (2) is interconnected with one or more public data communication networks by the data communication network (22).

2. The wind farm according to claim 1, wherein each of the plurality of wind turbine generators (2) comprises
a heat recovery arrangement (23) for recovering waste heat from the electrical generator (4) and from the data processing centre (20),
wherein the wind farm (1) furthermore comprises a heat recovery piping system (26) connecting each of said plurality of wind turbine generators (2) with a cooling water feed pipe (27) of the heat recovery piping system (26) arranged for supplying cooling water to the heat recovery arrangement (23) and a cooling water return pipe (28) of the heat recovery piping system (26) arranged for receiving heated cooling water from the heat recovery arrangement (23).

3. The wind farm according to claim 1 or 2, wherein each of the plurality of wind turbine generators (2) comprises
a rectifier (7) for converting alternating current power from the electrical generator (4) to direct current power,
a power inverter (9) for converting direct current power from the rectifier (7) to alternating current power, and
a DC-link (8) connecting the rectifier (7) and the power inverter (9),
wherein the data processing centre (20) is arranged for being powered by obtaining direct current power from the DC-link (8).

4. The wind farm (1) according to any of claims 1 to 3, wherein each of said plurality of wind turbine generators (2) furthermore comprises
an electrolyzer arrangement (15) for production of hydrogen arranged for using electrical power from the electrical generator (4).

5. The wind farm (1) according to claim 2 and 4, wherein the cooling water feed pipe (27) of the heat recovery piping system (26) furthermore is adapted for supplying water for electrolyzation to the electrolyzer arrangement (15).

6. The wind farm (1) according to claim 4 or 5, wherein the heat recovery arrangement (23) in each of the plurality of wind turbine generators (2) is arranged for recovering waste heat from the electrolyzer arrangement (15).

7. The wind farm (1) according to any of claims 4 to 6, wherein the electrolyzer arrangement (15) of each of the plurality of wind turbine generators (2) is arranged for being powered by obtaining direct current power from the DC-link (8).

8. The wind farm according to any of claims 2 to 7, wherein the cooling water return pipe (28) of the heat recovery piping system (26) is adapted for supplying recovered waste heat to a district heating system.

9. The wind farm (1) according to any of claims 4 to 8, wherein each of said plurality of wind turbine generators (2) furthermore comprises a hydrogen storage arrangement (16) for storing hydrogen produced by the electrolyzer arrangement (15) and an electrical power generation arrangement (17) for converting the stored hydrogen to electrical power, and wherein the heat recovery arrangement (23) in each of said wind turbine generators (2) is arranged for recovering waste heat from the electrical power generation arrangement (17).

10. The wind farm (1) according to claim 9, wherein the heat recovery arrangement (23) in each of said wind turbine generators (2) is adapted for recovering waste heat from the hydrogen storage arrangement (16).

11. The wind farm (1) according to claim 9 or 10, wherein the electrical power generation arrangement (17) is adapted for providing direct current power to the DC-link (8).

12. The wind farm (1) according to any of the preceding claims, wherein each of said plurality of wind turbine generators (2) further comprises a gearbox (5) connecting the rotor (3) and the electrical generator (4), and wherein the heat recovery arrangement (23) in each of said wind turbine generators (2) is adapted for recovering waste heat from the gearbox (5).

13. The wind farm (1) according to any of claims 3 to 12, wherein the heat recovery arrangement (23) in each of said wind turbine generators (2) is adapted for recovering waste heat from the power inverter (9).

14. The wind farm (1) according to any of claims 3 to 13, wherein each of said plurality of wind turbine generators (2) further comprises a step-up transformer (10) connected to the electrical power inverter (9) for raising the voltage of the power output from the electrical power inverter (9) and delivering an electrical power output to a power grid (11), such as an internal power grid (11) of the wind farm (1).

15. The wind farm (1) according to any of claims 4 to 14, further comprising a hydrogen piping system (18) arranged for receiving hydrogen from each of the plurality of wind turbine generators (2).

16. The wind farm (1) according to any of the preceding claims, further comprising a power transmission line (13) for transmitting electrical power from each of the wind turbine generators (2) to an electrical grid (14), wherein the nominal power that can be transmitted from the wind farm (1) by means of the power transmission line (13) constitutes no more than 65%, preferably no more than 50%, such as in the range of 15% to 40%, of the sum of the nominal capacity of the electrical generators (4) of all wind turbine generators (2) in the wind farm (1).

17. The wind farm (1) according to claim 16, wherein the nominal power capacity of the power transmission line (13) constitutes no more than 65%, preferably no more than 50%, such as in the range of 15% to 40%, of the sum of the nominal capacity of the electrical generators (4) of all wind turbine generators (2) in the wind farm (1).

18. The wind farm (1) according to any of claims 3 to 17, wherein the nominal power capacity of the power inverter (9) of each of the plurality of wind turbine generators (2) constitutes no more than 65%, preferably no more than 50%, such as in the range of 15% to 40%, of the nominal power capacity of the electrical generator (4) of that wind turbine generator (2).

19. The wind farm (1) according to any of the preceding claims, wherein said plurality of wind turbine generators (2) comprises at least 35 wind turbine generators (2), such as at least 50 wind turbine generators (2).

20. The wind farm (1) according to any of the preceding claims, wherein said plurality of wind turbine generators (2) are arranged in offshore positions.

21. The wind farm (1) according to any of the preceding claims, wherein the sum of nominal capacity of the electrical generators (4) of said plurality of wind turbine generators (2) is at least 50 MW, such as at least 250 MW for onshore wind farms and at least 500 MW, such as at least 1,000 MW for offshore farms.

22. The wind farm (1) according to any of claims 2 to 21, wherein the heat recovery arrangement (23) of each of said plurality of wind turbine generators (2) comprises a heat pump arrangement (31) arranged for raising the temperature of the heated water prior to being received by the cooling water return pipe (28).

## Patentansprüche

1. Windpark (1), umfassend eine Mehrzahl von Windenergieanlagen (2), von denen jede umfasst:
einen Rotor (3) mit einem oder mehreren Blättern,
einen elektrischen Generator (4), der von dem Rotor (3) angetrieben wird, um dessen Rotation in elektrische Leistung umzuwandeln, wobei der Windpark durch die folgenden Merkmale gekennzeichnet ist:
ein Datenverarbeitungszentrum (20) mit einer oder mehreren Datenverarbeitungseinheiten (21), die dazu ausgestaltet sind, mit einem Datenkommunikationsnetz (22) verbunden zu werden, und die dazu ausgestaltet sind, Daten über das Datenkommunikationsnetz (22) zu empfangen, zu verarbeiten, zu speichern und zu übertragen, wobei das Datenverarbeitungszentrum (20) so ausgelegt ist, dass es mit elektrischer Leistung betrieben wird, die von dem elektrischen Generator (4) erzeugt wird, und wobei der maximale Leistungsbedarf des Datenverarbeitungszentrums (20) mindestens 10 %, beispielsweise mindestens 30 % oder sogar mehr als 50 % der Nennleistungskapazität des elektrischen Generators (4) der Windenergieanlage (2) beträgt, wobei das Datenverarbeitungszentrum (20) der Windenergieanlage (2) über das Datenkommunikationsnetz (22) mit einem oder mehreren öffentlichen Datenkommunikationsnetzen verbunden ist.

2. Windpark nach Anspruch 1, wobei jede der Mehrzahl von Windenergieanlagen (2) umfasst:
eine Wärmerückgewinnungsanordnung (23) zur Rückgewinnung von Abwärme aus dem elektrischen Generator (4) und aus dem Datenverarbeitungszentrum (20),
wobei der Windpark (1) ferner ein Wärmerückgewinnungsleitungssystem (26) umfasst, das jede der Mehrzahl von Windenergieanlagen (2) mit einer Kühlwasser-Zuleitung (27) des Wärmerückgewinnungsleitungssystems (26), die zum Zuführen von Kühlwasser zur Wärmerückgewinnungsanordnung (23) ausgelegt ist, und mit einer Kühlwasser-Rückleitung (28) des Wärmerückgewinnungsleitungssystems (26), die zum Aufnehmen von erwärmtem Kühlwasser aus der Wärmerückgewinnungsanordnung (23) ausgelegt ist, verbindet.

3. Windpark nach Anspruch 1 oder 2, wobei jede der Mehrzahl von Windenergieanlagen (2) umfasst:
einen Gleichrichter (7) zur Umwandlung von Wechselstromleistung des elektrischen Generators (4) in Gleichstromleistung.
einen Wechselrichter (9) zur Umwandlung der Gleichstromleistung des Gleichrichters (7) in Wechselstromleistung, und
einen DC-Zwischenkreis (8), der den Gleichrichter (7) und den Wechselrichter (9) verbindet, wobei das Datenverarbeitungszentrum (20) so ausgelegt ist, dass es mit Gleichstromleistung aus dem DC-Zwischenkreis (8) betrieben wird.

4. Windpark (1) nach einem der Ansprüche 1 bis 3, wobei jede der Mehrzahl von Windenergieanlagen (2) ferner umfasst:
eine Elektrolyseuranordnung (15) zur Erzeugung von Wasserstoff, die zur Verwendung elektrischer Leistung des elektrischen Generators (4) ausgelegt ist.

5. Windpark (1) nach Anspruch 2 und 4, wobei die Kühlwasser-Zuleitung (27) des Wärmerückgewinnungsleitungssystems (26) ferner dazu ausgelegt ist, Wasser für die Elektrolyse zur Elektrolyseuranordnung (15) zuzuführen.

6. Windpark (1) nach Anspruch 4 oder 5, wobei die Wärmerückgewinnungsanordnung (23) in jeder der Mehrzahl von Windenergieanlagen (2) dazu ausgelegt ist, Abwärme aus der Elektrolyseuranordnung (15) zurückzugewinnen.

7. Windpark (1) nach einem der Ansprüche 4 bis 6, wobei die Elektrolyseuranordnung (15) jeder der Mehrzahl von Windenergieanlagen (2) so ausgelegt ist, dass sie mit Gleichstromleistung aus dem DC-Zwischenkreis (8) betrieben wird.

8. Windpark nach einem der Ansprüche 2 bis 7, wobei die Kühlwasser-Rückleitung (28) des Wärmerückgewinnungsleitungssystems (26) dazu ausgelegt ist, zurückgewonnene Abwärme einem Fernwärmesystem zuzuführen.

9. Windpark (1) nach einem der Ansprüche 4 bis 8, wobei jede der Mehrzahl von Windenergieanlagen (2) ferner eine Wasserstoffspeicheranordnung (16) zum Speichern des durch die Elektrolyseuranordnung (15) erzeugten Wasserstoffs und eine Anordnung (17) zum Erzeugen elektrischer Leistung zur Umwandlung des gespeicherten Wasserstoffs in elektrische Leistung umfasst, und wobei die Wärmerückgewinnungsanordnung (23) in jeder der Windenergieanlagen (2) dazu ausgelegt ist, Abwärme aus der Anordnung (17) zum Erzeugen elektrischer Leistung zurückzugewinnen.

10. Windpark (1) nach Anspruch 9, wobei die Wärmerückgewinnungsanordnung (23) in jeder der Windenergieanlagen (2) dazu ausgelegt ist, Abwärme aus der Wasserstoffspeicheranordnung (16) zurückzugewinnen.

11. Windpark (1) nach Anspruch 9 oder 10, wobei die Anordnung (17) zum Erzeugen elektrischer Leistung dazu ausgelegt ist, Gleichstromleistung dem DC-Zwischenkreis (8) bereitzustellen.

12. Windpark (1) nach einem der vorhergehenden Ansprüche, wobei jede der Mehrzahl von Windenergieanlagen (2) ferner ein Getriebe (5) umfasst, das den Rotor (3) und den elektrischen Generator (4) verbindet, und wobei die Wärmerückgewinnungsanordnung (23) in jeder der Windenergieanlagen (2) dazu ausgelegt ist, Abwärme aus dem Getriebe (5) zurückzugewinnen.

13. Windpark (1) nach einem der Ansprüche 3 bis 12, wobei die Wärmerückgewinnungsanordnung (23) in jeder der Windenergieanlagen (2) dazu ausgelegt ist, Abwärme aus dem Wechselrichter (9) zurückzugewinnen.

14. Windpark (1) nach einem der Ansprüche 3 bis 13, wobei jede der Mehrzahl von Windenergieanlagen (2) ferner einen Hochspannungstransformator (10) umfasst, der mit dem Leistungsumrichter (9) verbunden ist, um die Spannung der vom Leistungsumrichter (9) abgegebenen Leistung zu erhöhen und elektrische Leistung an ein Stromnetz (11), beispielsweise ein internes Stromnetz (11) des Windparks (1), abzugeben.

15. Windpark (1) nach einem der Ansprüche 4 bis 14, ferner umfassend ein Wasserstoffleitungssystem (18), das dazu ausgelegt ist, Wasserstoff von jeder der Mehrzahl von Windenergieanlagen (2) aufzunehmen.

16. Windpark (1) nach einem der vorhergehenden Ansprüche, ferner umfassend eine Leistungsübertragungsleitung (13) zur Übertragung elektrischer Leistung von jeder der Windenergieanlagen (2) zu einem elektrischen Netz (14), wobei die Nennleistung, die vom Windpark (1) mittels der Leistungsübertragungsleitung (13) übertragen werden kann, höchstens 65 %, vorzugsweise höchstens 50 %, beispielsweise im Bereich von 15 % bis 40 %, der Summe der Nennleistung der elektrischen Generatoren (4) aller Windenergieanlagen (2) im Windpark (1) beträgt.

17. Windpark (1) nach Anspruch 16, wobei die Nennleistungskapazität der Leistungsübertragungsleitung (13) höchstens 65 %, vorzugsweise höchstens 50 %, beispielsweise im Bereich von 15 % bis 40 %, der Summe der Nennleistung der elektrischen Generatoren (4) aller Windenergieanlagen (2) im Windpark (1) beträgt.

18. Windpark (1) nach einem der Ansprüche 3 bis 17, wobei die Nennleistungskapazität des Wechselrichters (9) jeder der Mehrzahl von Windenergieanlagen (2) höchstens 65 %, vorzugsweise höchstens 50 %, beispielsweise im Bereich von 15 % bis 40 %, der Nennleistungskapazität des elektrischen Generators (4) dieser Windenergieanlage (2) beträgt.

19. Windpark (1) nach einem der vorhergehenden Ansprüche, wobei die Mehrzahl von Windenergieanlagen (2) mindestens 35 Windenergieanlagen (2), beispielsweise mindestens 50 Windenergieanlagen (2), umfasst.

20. Windpark (1) nach einem der vorhergehenden Ansprüche, wobei die Mehrzahl von Windenergieanlagen (2) in Offshore-Positionen angeordnet ist.

21. Windpark (1) nach einem der vorhergehenden Ansprüche, wobei die Summe der Nennleistung der elektrischen Generatoren (4) der Mehrzahl von Windenergieanlagen (2) mindestens 50 MW beträgt, beispielsweise mindestens 250 MW für Onshore-Windparks und mindestens 500 MW, beispielsweise mindestens 1.000 MW für Offshore-Windparks.

22. Windpark (1) nach einem der Ansprüche 2 bis 21, wobei die Wärmerückgewinnungsanordnung (23) jeder der Mehrzahl von Windenergieanlagen (2) eine Wärmepumpenanordnung (31) umfasst, die dazu ausgelegt ist, die Temperatur des erwärmten Wassers zu erhöhen, bevor dieses von der Kühlwasser-Rückleitung (28) aufgenommen wird.

## Revendications

1. Parc éolien (1) comprenant une pluralité d'aérogénérateurs (2), dont chacun comprend :
un rotor (3) ayant une ou plusieurs pales ;
un générateur électrique (4) entraîné par ledit rotor (3) pour convertir la rotation de celui-ci en puissance électrique, le parc éolien étant **caractérisé par** les caractéristiques suivantes :
un centre de traitement de données (20) ayant une ou plusieurs unités de traitement de données (21) configurées pour être connectées à un réseau de communication de données (22) et configurées pour recevoir, traiter, stocker et transmettre des données sur le réseau de communication de données (22), dans lequel le centre de traitement de données (20) est agencé pour être alimenté par la puissance électrique générée par le générateur électrique (4) et dans lequel la consommation de puissance maximale du centre de traitement de données (20) constitue au moins 10 %, tel qu'au moins 30 % ou même plus de 50 % de la capacité de puissance nominale du générateur électrique (4) dudit aérogénérateur (2), dans lequel le centre de traitement de données (20) de l'aérogénérateur (2) est interconnecté avec un ou plusieurs réseaux publics de communication de données par le réseau de communication de données (22).

2. Parc éolien selon la revendication 1, dans lequel chacun de la pluralité d'aérogénérateurs (2) comprend :
un agencement de récupération de chaleur (23) pour récupérer la chaleur fatale provenant du générateur électrique (4) et provenant du centre de traitement de données (20) ; dans lequel le parc éolien (1) comprend en outre un système de tuyauterie de récupération de chaleur (26) connectant chacun de ladite pluralité d'aérogénérateurs (2) avec un tuyau d'alimentation en eau de refroidissement (27) du système de tuyauterie de récupération de chaleur (26) agencé pour fournir de l'eau de refroidissement à l'agencement de récupération de chaleur (23) et un tuyau de retour d'eau de refroidissement (28) du système de tuyauterie de récupération de chaleur (26) agencé pour recevoir de l'eau de refroidissement chauffée provenant de l'agencement de récupération de chaleur (23).

3. Parc éolien selon la revendication 1 ou 2, dans lequel chacun de la pluralité d'aérogénérateurs (2) comprend :
un redresseur (7) pour convertir la puissance en courant alternatif provenant du générateur électrique (4) en puissance en courant continu ;
un onduleur de puissance (9) pour convertir la puissance en courant continu provenant du redresseur (7) en puissance en courant alternatif ; et
une liaison CC (8) connectant le redresseur (7) et l'onduleur de puissance (9), dans lequel le centre de traitement de données (20) est agencé pour être alimenté en obtenant de la puissance en courant continu à partir de la liaison CC (8).

4. Parc éolien (1) selon l'une quelconque des revendications 1 à 3, dans lequel chacun de ladite pluralité d'aérogénérateurs (2) comprend
en outre un agencement d'électrolyseur (15) pour la production d'hydrogène agencé pour utiliser la puissance électrique provenant du générateur électrique (4).

5. Parc éolien (1) selon les revendications 2 et 4, dans lequel le tuyau d'alimentation en eau de refroidissement (27) du système de tuyauterie de récupération de chaleur (26) est en outre adapté pour fournir de l'eau pour l'électrolyse à l'agencement d'électrolyseur (15).

6. Parc éolien (1) selon la revendication 4 ou 5, dans lequel l'agencement de récupération de chaleur (23) dans chacun de la pluralité d'aérogénérateurs (2) est agencé pour récupérer la chaleur fatale provenant de l'agencement d'électrolyseur (15).

7. Parc éolien (1) selon l'une quelconque des revendications 4 à 6, dans lequel l'agencement d'électrolyseur (15) de chacun de la pluralité d'aérogénérateurs (2) est agencé pour être alimenté en obtenant de la puissance en courant continu à partir de la liaison CC (8).

8. Parc éolien selon l'une quelconque des revendications 2 à 7, dans lequel le tuyau de retour d'eau de refroidissement (28) du système de tuyauterie de récupération de chaleur (26) est adapté pour fournir la chaleur fatale récupérée à un système de chauffage urbain.

9. Parc éolien (1) selon l'une quelconque des revendications 4 à 8, dans lequel chacun de ladite pluralité d'aérogénérateurs (2) comprend en outre un agencement de stockage d'hydrogène (16) pour stocker l'hydrogène produit par l'agencement d'électrolyseur (15) et un agencement de génération de puissance électrique (17) pour convertir l'hydrogène stocké en puissance électrique, et dans lequel l'agencement de récupération de chaleur (23) dans chacun desdits aérogénérateurs (2) est agencé pour récupérer la chaleur fatale provenant de l'agencement de génération de puissance électrique (17).

10. Parc éolien (1) selon la revendication 9, dans lequel l'agencement de récupération de chaleur (23) dans chacun desdits aérogénérateurs (2) est adapté pour récupérer la chaleur fatale provenant de l'agencement de stockage d'hydrogène (16).

11. Parc éolien (1) selon la revendication 9 ou 10, dans lequel l'agencement de génération de puissance électrique (17) est adapté pour fournir de la puissance en courant continu à la liaison CC (8).

12. Parc éolien (1) selon l'une quelconque des revendications précédentes, dans lequel chacun de ladite pluralité d'aérogénérateurs (2) comprend en outre une boîte de vitesses (5) connectant le rotor (3) et le générateur électrique (4), et dans lequel l'agencement de récupération de chaleur (23) dans chacun desdits aérogénérateurs (2) est adapté pour récupérer la chaleur fatale provenant de la boîte de vitesses (5).

13. Parc éolien (1) selon l'une quelconque des revendications 3 à 12, dans lequel l'agencement de récupération de chaleur (23) dans chacun desdits aérogénérateurs (2) est adapté pour récupérer la chaleur fatale provenant de l'onduleur de puissance (9).

14. Parc éolien (1) selon l'une quelconque des revendications 3 à 13, dans lequel chacun de ladite pluralité d'aérogénérateurs (2) comprend en outre un transformateur élévateur (10) connecté à l'onduleur de puissance électrique (9) pour élever la tension de la sortie de puissance provenant de l'onduleur de puissance électrique (9) et délivrer une sortie de puissance électrique à un réseau électrique (11), tel qu'un réseau électrique interne (11) du parc éolien (1).

15. Parc éolien (1) selon l'une quelconque des revendications 4 à 14, comprenant en outre un système de tuyauterie d'hydrogène (18) agencé pour recevoir de l'hydrogène provenant de chacune de la pluralité d'aérogénérateurs (2).

16. Parc éolien (1) selon l'une quelconque des revendications précédentes, comprenant en outre une ligne de transport d'énergie (13) pour transmettre la puissance électrique provenant de chacun des aérogénérateurs (2) vers un réseau électrique (14), dans lequel la puissance nominale qui peut être transmise à partir du parc éolien (1) au moyen de la ligne de transport d'énergie (13) constitue au plus 65 %, de préférence au plus 50 %, tel que dans la plage de 15 % à 40 %, de la somme de la capacité nominale des générateurs électriques (4) de tous les aérogénérateurs (2) dans le parc éolien (1).

17. Parc éolien (1) selon la revendication 16, dans lequel la capacité de puissance nominale de la ligne de transport d'énergie (13) constitue au plus 65 %, de préférence au plus 50 %, tel que dans la plage de 15 % à 40 %, de la somme de la capacité nominale des générateurs électriques (4) de tous les aérogénérateurs (2) dans le parc éolien (1).

18. Parc éolien (1) selon l'une quelconque des revendications 3 à 17, dans lequel la capacité de puissance nominale de l'onduleur de puissance (9) de chacun de la pluralité d'aérogénérateurs (2) constitue au plus 65 %, de préférence au plus 50 %, tel que dans la plage de 15 % à 40 %, de la capacité de puissance nominale du générateur électrique (4) de cet aérogénérateur (2).

19. Parc éolien (1) selon l'une quelconque des revendications précédentes, dans lequel ladite pluralité d'aérogénérateurs (2) comprend au moins 35 aérogénérateurs (2), tel qu'au moins 50 aérogénérateurs (2).

20. Parc éolien (1) selon l'une quelconque des revendications précédentes, dans lequel ladite pluralité d'aérogénérateurs (2) est agencée dans des positions en mer.

21. Parc éolien (1) selon l'une quelconque des revendications précédentes, dans lequel la somme de la capacité nominale des générateurs électriques (4) de ladite pluralité d'aérogénérateurs (2) est d'au moins 50 MW, tel qu'au moins 250 MW pour des parcs éoliens terrestres et au moins 500 MW, tel qu'au moins 1000 MW pour des parcs en mer.

22. Parc éolien (1) selon l'une quelconque des revendications 2 à 21, dans lequel l'agencement de récupération de chaleur (23) de chacun de ladite pluralité d'aérogénérateurs (2) comprend un agencement de pompe à chaleur (31) agencé pour élever la température de l'eau chauffée avant qu'elle ne soit reçue par le tuyau de retour d'eau de refroidissement (28).
